# FASCICULE DE BREVET EUROPEEN

(11) **EP 3 803 924 B1**
(45) Date de publication et mention de la délivrance du brevet: **23.02.2022**
(21) Numéro de dépôt: 19734129.0
(22) Date de dépôt: 21.05.2019
(51) Int. Cl.: H01F 38/14, H01F 27/36, H02J 50/10, H02M 3/335

(54) **SYSTÈME ÉLECTRIQUE PRÉSENTANT AU MOINS UNE INDUCTANCE À ARCHITECTURE AMÉLIORÉE**
ELEKTRISCHES SYSTEM UMFASSEND MINDESTENS EINER INDUKTIVITÄT MIT VERBESSERTER ARCHITEKTUR
ELECTRICAL SYSTEM COMPRISING AT LEAST AN INDUCTANCE WITH IMPROVED ARCHITECTURE

(30) Priorité: 24.05.2018 FR 1854401
(43) Date de publication de la demande: 14.04.2021
(73) Titulaire: Commissariat à l'Énergie Atomique et aux Énergies Alternatives, 75015 Paris (FR)
(72) Inventeur: REGNAT, Guillaume, 38054 Grenoble Cedex 9 (FR); LEFEVRE, Guillaume, 38054 Grenoble Cedex 9 (FR)
(74) Mandataire: Jacobacci Coralis Harle
(86) Numéro de dépôt international: PCT/FR2019/051150
(87) Numéro de publication internationale: WO 2019/224472

(56) Documents cités:
- EP-A1- 2 924 842
- EP-B1- 2 924 842
- WO-A1-2015/075172
- CN-U- 203 588 822
- JP-B2- 3 381 531
- US-A1- 2011 102 121

## Description

### Domaine technique de l'invention

La présente invention se rapporte à un système électrique présentant une inductance à architecture améliorée. Le système électrique pourra notamment être un système de transmission d'énergie sans contact, qui comporte un transformateur doté d'un premier enroulement et d'un deuxième enroulement.

### Etat de la technique

Les systèmes de transmission d'énergie sans contact sont désormais employés dans de nombreuses applications afin de limiter le câblage, de gagner en encombrement et de faciliter l'utilisation d'appareils. De telles solutions ont par exemple été développées pour la recharge de véhicule électrique par induction ou pour la récupération d'énergie électrique entre des panneaux photovoltaïques et le réseau.

Ces systèmes à transmission d'énergie sans contact utilisent donc un transformateur pour réaliser la transmission d'énergie sans contact entre un premier circuit électrique connecté au premier enroulement du transformateur et un deuxième circuit électrique connecté au deuxième enroulement du transformateur. Selon le sens de transmission de l'énergie électrique, le premier enroulement et le deuxième enroulement du transformateur pourront être son enroulement primaire ou son enroulement secondaire. Ces solutions de transmission utilisent couramment une ou plusieurs inductances de lissage en entrée.

De manière classique, une inductance de lissage comporte un noyau ferromagnétique en deux parties séparées entre elles par au moins un entrefer pour créer un circuit magnétique. Le noyau ferromagnétique comporte plusieurs branches et un enroulement réalisé autour de l'une de ses branches et connecté à l'un des deux circuits électriques du système.

Dans les systèmes connus, les inductances de lissage s'avèrent particulièrement encombrantes, notamment à cause de leur noyau ferromagnétique. Et il n'existe pas de solutions satisfaisantes et suffisamment robustes pour réduire cet encombrement.

Comme la présence de ces inductances est souvent nécessaire au bon fonctionnement du système de transmission d'énergie sans contact, il existe un besoin pour que leur encombrement soit limité au maximum, tout en ne dégradant pas le fonctionnement du système.

Cette contrainte existe dans un système de transmission d'énergie sans contact mais, plus globalement, elle est présente dans tout système électrique qui utilise une inductance telle que décrite ci-dessus à base d'un noyau ferromagnétique en deux parties.

Les documents WO2015/075172A1, CN203588822U et EP2924842A1 illustrent l'arrière-plan technologique.

### Exposé de l'invention

L'invention concerne ainsi un système électrique qui comporte au moins un premier circuit électrique, un dispositif électrique, une première carte de circuit imprimé supportant ledit premier circuit électrique, un dispositif de blindage dudit dispositif électrique comportant au moins une première plaque de blindage fixée à ladite première carte de circuit imprimé, ledit premier circuit électrique comportant au moins une inductance, ladite inductance comportant au moins une première pièce ferromagnétique fixée sur la première carte de circuit imprimé et agencée pour présenter au moins un entrefer avec ladite première plaque de blindage de manière à former avec celle-ci un circuit magnétique.

Selon une particularité, ledit entrefer du circuit magnétique est créé entre une première surface d'entrefer de ladite première pièce ferromagnétique de l'inductance et une deuxième surface d'entrefer située en vis-à-vis appartenant à ladite première plaque de blindage, et cette deuxième surface d'entrefer de la plaque présente une superficie inférieure à celle de la surface totale de la première plaque de blindage.

Selon une autre particularité, la première carte de circuit imprimé comporte au moins une première couche isolante électrique sur laquelle est fixée ladite première plaque de blindage.

Selon une réalisation particulière, le système est de type à transmission d'énergie sans contact comportant un deuxième circuit électrique, une deuxième carte de circuit imprimé supportant le deuxième circuit électrique, un transformateur formant ledit dispositif électrique et comportant un premier enroulement auquel est connecté ledit premier circuit électrique et un deuxième enroulement auquel est connecté ledit deuxième circuit électrique.

Selon une particularité, le premier circuit électrique et le deuxième circuit électrique comportent un convertisseur de puissance d'entrée et un convertisseur principal comportant ledit transformateur, un premier pont de commutation connecté au premier enroulement du transformateur et un deuxième pont de commutation connecté au deuxième enroulement du transformateur.

Selon une autre particularité, la première carte de circuit imprimé comporte une première face sur laquelle est réalisée ledit premier circuit électrique et une deuxième face sur laquelle est fixée ladite première plaque de blindage.

Selon une autre particularité, ledit premier enroulement du transformateur est fixé à ladite première plaque de blindage.

Selon une autre particularité, le dispositif de blindage comporte une deuxième plaque de blindage fixée à la deuxième carte de circuit imprimé et ladite deuxième carte de circuit imprimé comporte une première face sur laquelle est fixée ladite deuxième plaque de blindage et une deuxième face sur laquelle est réalisée ledit deuxième circuit électrique.

Selon une autre particularité, ledit deuxième enroulement du transformateur est fixé à ladite deuxième plaque de blindage.

Selon une autre particularité, la deuxième carte de circuit imprimé comporte au moins une deuxième couche isolante électrique sur laquelle est fixée ladite deuxième plaque de blindage.

### Brève description des figures

D'autres caractéristiques et avantages vont apparaître dans la description détaillée qui suit, faite en regard des dessins annexés listés ci-dessous :
- La figure 1A représente de manière schématique et vue en coupe transversale, une inductance pouvant être employée dans un système électrique; La figure 1B représente en vue de dessus le principe de réalisation de l'enroulement planaire employé dans ladite inductance de la figure 1A ;
- La figure 2 représente un système électrique tel qu'un système de transmission d'énergie sans contact ;
- La figure 3 représente de manière schématique, le principe de réalisation d'un transformateur pouvant être employé dans le système de transmission d'énergie sans contact de la figure 2 ;
- La figure 4 représente une première réalisation du système de transmission d'énergie sans contact de la figure 2, selon l'état de la technique ;
- La figure 5 représente de manière schématique un système électrique quelconque illustrant le principe de l'invention ;
- La figure 6 représente le système de transmission d'énergie sans contact de la figure 2, mettant en œuvre le principe de l'invention ;

### Description détaillée d'au moins un mode de réalisation

Dans la suite de la description, les termes "supérieur", "inférieur", "dessus" et "dessous" ou équivalents sont à comprendre de manière non limitative et à interpréter en tenant compte d'une direction principale (A) tracée de manière verticale sur les dessins, dans le plan de la feuille.

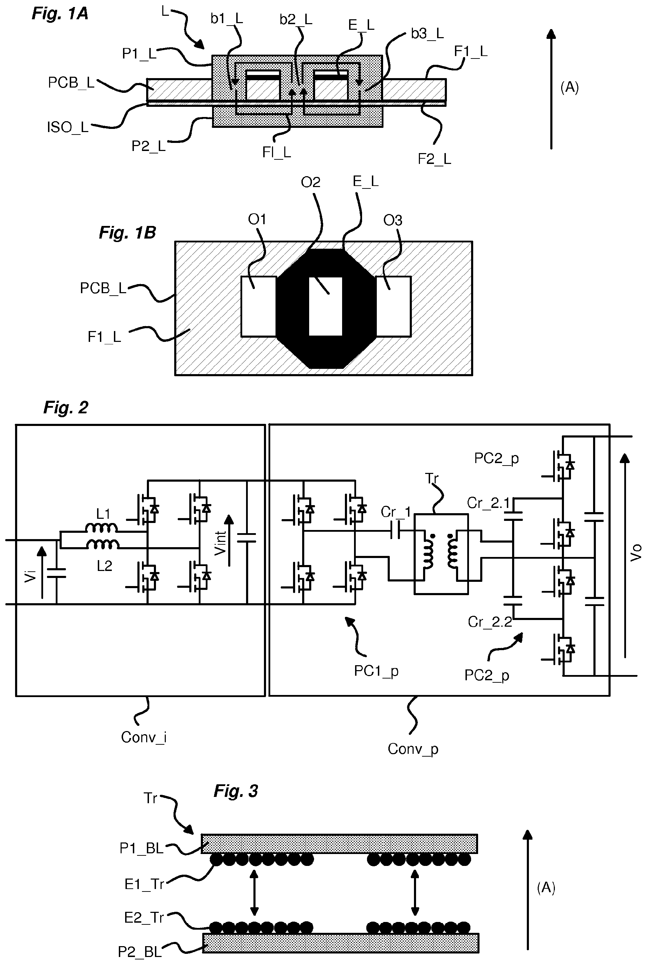

Dans un système électrique, il est courant d'employer une inductance L pouvant présenter des fonctions diverses. L'inductance L peut par exemple être une inductance de lissage située en entrée d'un convertisseur. En référence aux figures 1A et 1B, une inductance L peut par exemple se composer d'un noyau ferromagnétique en deux parties, une partie dite inférieure P2_L et une partie supérieure P1_L portant trois branches b1, b2, b3, chacune des trois branches étant séparée de la partie inférieure par un entrefer distinct. Un enroulement E_L est enroulé autour de la branche centrale b2. Une telle inductance L peut par exemple être réalisée en employant deux pièces ferromagnétiques formant les deux parties du noyau et une carte de circuit imprimé PCB_L sur laquelle est réalisé l'enroulement E_L sous une forme planaire, c'est-à-dire sous la forme de pistes conductrices imprimées sur la carte. La carte PCB_L présente plusieurs ouvertures O1, O2, O3 pour laisser passer les branches b1_L, b2_L, b3_L du noyau ferromagnétique, notamment une ouverture destinée au passage de la branche centrale à travers l'enroulement planaire E_L réalisé sur la carte. La carte peut comporter une couche isolante ISO_L inférieure formant une cale mécanique et permettant d'isoler la première partie de la deuxième partie du noyau et de créer les entrefers magnétiques entre les deux parties du noyau. Cette couche est réalisée sur la face inférieure F2_L de la carte PCB_L. Le flux magnétique généré dans l'inductance est référencé FI_L.

Ce type d'inductance peut être employé dans différents types de système électrique. Certains de ces systèmes sont également dotés d'un dispositif de blindage, permettant de protéger certains de ses composants contre les phénomènes électromagnétiques, limitant ainsi les perturbations. C'est par exemple le cas des systèmes électriques tels que les systèmes de transmission d'énergie sans contact.

De manière générale, un système de transmission d'énergie sans contact comporte un transformateur Tr qui comporte un premier enroulement E1_Tr et un deuxième enroulement E2_Tr. Selon le sens de transmission de l'énergie électrique, le premier enroulement E1_Tr sera son enroulement primaire ou son enroulement secondaire et le deuxième enroulement E2_Tr sera respectivement son enroulement secondaire ou son enroulement primaire.

En référence à la figure 3, le transformateur Tr est qualifié de sans contact quand ses enroulements primaires et secondaires ne sont pas disposés sur le même support mécanique. De nombreux fabricants commercialisent des transformateurs sans contact dans lesquels chaque enroulement comporte plusieurs enroulements concentriques collés sur une plaque de blindage en matériau magnétique. Pour un transfert d'énergie efficace, les deux enroulements doivent être disposés l'un en face de l'autre. Différentes solutions peuvent être prévues pour ajuster le positionnement relatif des deux enroulements. Les deux plaques de blindage P1_BL, P2_BL en matériau magnétique forment un dispositif de blindage du transformateur Tr et permettent de limiter les perturbations électromagnétiques et d'assurer un transfert d'énergie électrique avec un rendement satisfaisant. De manière non limitative, le premier enroulement E1_Tr est fixé sur la face inférieure de la première plaque de blindage et le deuxième enroulement E2_Tr est fixé sur la face supérieure de la deuxième plaque de blindage.

Le système de transmission d'énergie sans contact comporte également un premier circuit électrique et un deuxième circuit électrique. Le premier circuit électrique est connecté au premier enroulement E1_Tr du transformateur et le deuxième circuit électrique est connecté à son deuxième enroulement E2_Tr.

Pour prélever de l'énergie en provenance d'au moins un panneau photovoltaïque (fournissant une tension d'entrée Vi), le système de transmission d'énergie sans contact comporte notamment un convertisseur d'entrée (pouvant être de type éleveur, abaisseur ou autre) Conv_i doté de transistors pouvant être commandés pour fournir une puissance maximale (avec un algorithme de recherche de point de fonctionnement maximal désigné MPP pour "Maximum Power Point") à une charge à partir d'une tension d'entrée Vi fournie par le panneau photovoltaïque. Dans cette application photovoltaïque, le système comporte en outre un convertisseur principal Conv_p employé pour le transfert d'énergie sans contact. Ce convertisseur principal Conv_p comporte un premier pont de commutation PC1_p présentant une première série de plusieurs transistors commandés, connecté d'une part au convertisseur d'entrée pour recevoir une tension dite intermédiaire Vint générée par le convertisseur d'entrée et d'autre part au premier enroulement E1_Tr du transformateur et un deuxième pont de commutation PC2_p présentant une deuxième série de transistors commandés, connecté d'une part au deuxième enroulement E2_Tr du transformateur et commandé pour fournir une tension de sortie Vo. Le convertisseur principal peut être de type résonant. Il peut être doté d'un circuit résonant placé du côté primaire et/ou du côté secondaire. Le circuit résonant peut comporter un ou plusieurs condensateurs Cr_1, Cr_2.1, Cr_2.2 placés du côté primaire et/ou secondaire du système.

Le convertisseur d'entrée Conv_i comporte en règle générale une ou plusieurs inductances L1, L2 (par exemple de lissage) en entrée ou en sortie selon sa configuration. Une inductance de lissage peut par exemple présenter une architecture telle que celle décrite ci-dessus en liaison avec les figures 1A et 1B.

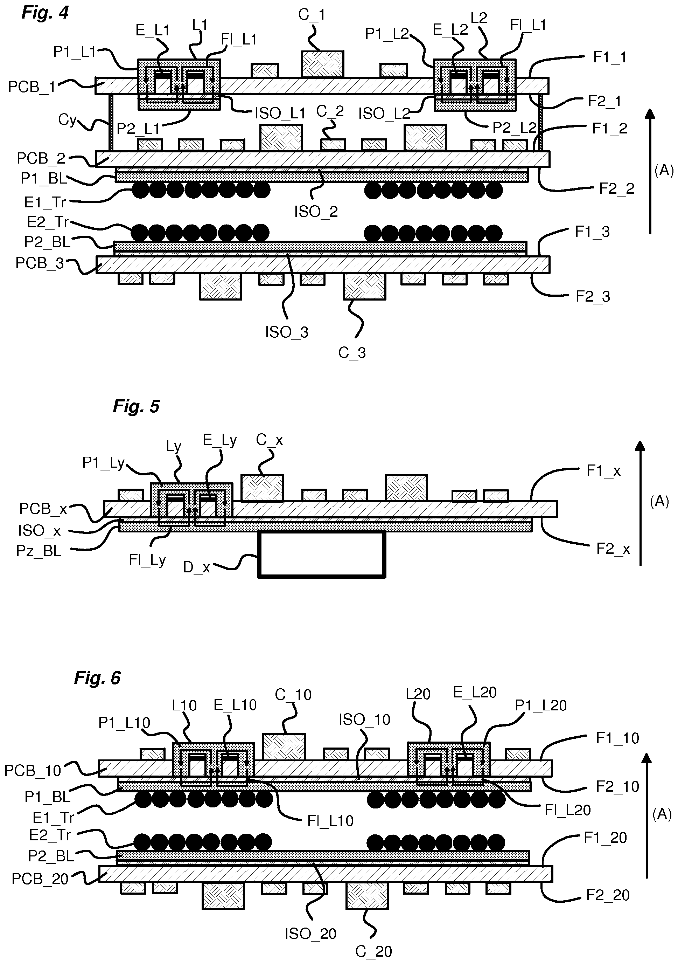

En référence à la figure 4, de manière classique et connue dans l'état de la technique, le système de transmission d'énergie sans contact est alors réalisé en employant trois cartes de circuit imprimé :
- Une première carte de circuit imprimé PCB_1 qui est destinée au convertisseur d'entrée Conv_i et qui comporte une face dite supérieure F1_1 et une face opposée dite inférieure F2_1 qui ont des superficies identiques ;
- Une deuxième carte de circuit imprimé PCB_2 qui est destinée au premier pont de commutation PC1_p du convertisseur principal et qui comporte une face supérieure F1_2 et une face opposée dite inférieure F2_2 qui ont des superficies identiques ;
- Une troisième carte de circuit imprimé PCB_3 qui est destinée au deuxième pont de commutation PC2_p du convertisseur principal et qui comporte une face supérieure F1_3 et une face opposée, dite inférieure F2_3 qui ont des superficies identiques ;

Le circuit du convertisseur d'entrée Conv_i peut être réalisé sur la face supérieure F1_1 de la première carte PCB_1 et peut comporter des composants électroniques C_1 (par exemple de type CMS - Composants Montés en Surface) soudés sur cette face supérieure et des pistes électriques imprimées sur la face supérieure.

Les inductances L1, L2 de lissage du convertisseur d'entrée Conv_i sont réalisées selon le principe décrit ci-dessus (figures 1A et 1B) sur la première carte de circuit imprimé PCB_1. Pour chaque inductance, leur enroulement E_L1, E_L2 est formé par des pistes électriques imprimées sur la carte PCB_1 et les trois branches de la première partie P1_L1, P1_L2 du noyau ferromagnétique traversent la carte sur son épaisseur par des ouvertures adaptées. Le circuit magnétique est fermé par la deuxième partie P2_L1, P2_L2 du noyau ferromagnétique, positionnée sous la carte. Les flux magnétiques générées dans les deux inductances sont référencés respectivement FI_L1 et FI_L2.

Le circuit du premier pont de commutation PC1_p du convertisseur principal peut être réalisé sur la face supérieure F1_2 de la deuxième carte PCB_2 et peut comporter des composants électroniques C_2 (par exemple de type CMS - Composants Montés en Surface) soudés sur cette face supérieure et des pistes électriques imprimées sur cette face supérieure.

La première plaque de blindage P1_BL, supportant le premier enroulement E1_Tr du transformateur, est fixée sur la face inférieure de la deuxième carte.

Le circuit du deuxième pont de commutation PC2_p du convertisseur principal peut être réalisé sur la face inférieure F2_3 de la troisième carte PCB_3 et peut comporter des composants électroniques C_3 (par exemple de type CMS - Composants Montés en Surface) soudés sur cette face inférieure et des pistes électriques imprimées sur cette face inférieure F2_3 de la troisième carte.

La deuxième plaque de blindage P2_BL supportant le deuxième enroulement E2_Tr du transformateur est fixée sur la face supérieure F1_3 de la troisième carte PCB_3, les deux enroulements E1_Tr, E2_Tr étant placés en vis-à-vis et séparée l'un de l'autre (c'est-à-dire non en contact physique) pour assurer le transfert d'énergie sans contact.

Des connecteurs Cy électriques peuvent être agencés pour réaliser un pont électrique physique entre la première carte de circuit imprimé et la deuxième carte de circuit imprimé et connecter ainsi le convertisseur d'entrée Conv_i au premier pont de commutation PC1_p du convertisseur principal.

La deuxième carte de circuit imprimé PCB_2 et la troisième carte de circuit imprimé PCB_3 présentent chacune une couche isolante ISO_2, ISO_3 et électrique contre laquelle est fixée la plaque de blindage associée.

On comprend que cette solution antérieure n'est pas forcément satisfaisante, notamment en termes d'encombrement.

Le principe de l'invention consiste à utiliser le dispositif de blindage employé dans un système électrique quelconque pour fermer le circuit magnétique de chaque inductance et ainsi s'affranchir de l'emploi d'une partie du noyau ferromagnétique de l'inductance. Ce principe peut s'appliquer pour chaque autre inductance du système, en employant la même plaque de blindage pour fermer le circuit magnétique de chaque autre inductance ou en employant des plaques de blindage supplémentaires du transformateur.

Ce principe de l'invention est illustré par la figure 5. Cette figure 5 montre ainsi un système électrique qui comporte au moins une carte de circuit imprimé PCB_x dotée d'une face supérieure F1_x et d'une face inférieure F2_x de superficies identiques. Le système comporte également un premier circuit électrique réalisé sur la face supérieure de ladite carte, comportant par exemple des composants C_x montés en surface et des pistes électriques imprimées sur cette face supérieure F1_x. Le système comporte également au moins un dispositif électrique D_x nécessitant un blindage. Ce dispositif électrique D_x peut être un transformateur, un connecteur ou tout autre dispositif pouvant nécessiter un blindage. Un dispositif de blindage comporte au moins une plaque de blindage Pz_BL en matériau ferromagnétique comportant une face supérieure et une face inférieure. La plaque de blindage Px_BL est fixée par sa face supérieure sur la face inférieure F2_x de la carte de circuit imprimé et présente une superficie adaptée pour recouvrir au moins partiellement la face inférieure de la première carte de circuit imprimé. Le dispositif électrique D_x à blinder peut être fixé sur la face inférieure de ladite plaque de blindage. Pour appliquer le principe de l'invention, le premier circuit électrique comporte une inductance Ly (par exemple une inductance de lissage ou autre). L'enroulement E_Ly de cette inductance est par exemple imprimé sur la face supérieure F1_x de la carte de circuit imprimé PCB_x et la première partie P1_Ly de son noyau ferromagnétique est passée dans les ouvertures réalisées à travers l'épaisseur de ladite carte. La fermeture de son circuit magnétique est assurée par la plaque de blindage Pz_BL et non par la deuxième partie dédiée de son noyau ferromagnétique. Au moins un entrefer est maintenu entre la première partie P1_Ly du noyau ferromagnétique et la plaque de blindage Pz_BL. Pour assurer cet entrefer de l'inductance, la carte de circuit imprimé peut comporter au moins une couche inférieure ISO_x isolante électrique formant sa face inférieure et sur laquelle est fixée ladite plaque de blindage.

Selon un aspect particulier de l'invention, chaque entrefer du circuit magnétique de l'inductance est créé entre une première surface d'entrefer de la première partie du noyau et une deuxième surface d'entrefer située en vis-à-vis de la plaque de blindage, cette deuxième surface d'entrefer de la plaque de blindage présentant une superficie inférieure à celle de la surface totale de la face de la plaque de blindage. Autrement dit, seulement une partie de la plaque de blindage sert au passage du flux magnétique FI_Lx généré dans le circuit magnétique de l'inductance et non la totalité de la plaque. Ladite plaque peut d'ailleurs servir à fermer le circuit magnétique d'une ou plusieurs autres inductances du système. Pour une inductance du type de la figure 1A qui comporte trois entrefers et dont la première partie P1_Ly du noyau porte trois surfaces d'entrefer, les trois surfaces d'entrefer correspondantes de la plaque de blindage Pz_BL présentent en cumulé une superficie inférieure à celle de la surface totale de la face correspondante de la plaque de blindage.

Le principe décrit ci-dessus peut s'appliquer au système de transmission d'énergie sans contact tel que décrit ci-dessus. La figure 6 représente l'application de ce principe à la topologie du système de transmission d'énergie décrit ci-dessus en liaison avec la figure 4.

Dans cette réalisation, le système utilise deux cartes de circuit imprimé PCB_10, PCB_20 pour supporter le convertisseur d'entrée Conv_i et les deux ponts de commutation du convertisseur principal Conv_p. Le convertisseur d'entrée Conv_i et le premier pont de commutation PC1_p du convertisseur principal sont réalisés sur la face supérieure F1_10 de la première carte de circuit imprimé et comportent chacun des composants C_10 soudés sur la face supérieure F1_10 de cette première carte PCB_10 et des pistes électriques imprimées sur la face supérieure F1_10 de cette carte. Le deuxième pont de commutation PC2_p du convertisseur principal est réalisé sur la face inférieure F2_20 de la deuxième carte de circuit imprimé et comporte des composants C_20 soudés sur la face inférieure F2_20 de cette deuxième carte PCB_20 et des pistes électriques imprimées sur la face inférieure F2_20 de cette carte. Le dispositif de blindage est employé pour le blindage du transformateur Tr. La première plaque de blindage P1_BL du dispositif de blindage du transformateur est fixée, par sa face supérieure, sur la face inférieure de la première carte de circuit imprimé et occupe avantageusement toute sa surface. Le premier enroulement E1_Tr du transformateur est fixé sur la face inférieure de cette première plaque de blindage.

Le dispositif de blindage peut comporter une deuxième plaque de blindage P2_BL qui est fixée, par sa face inférieure, sur la face supérieure F2_20 de la deuxième carte de circuit imprimé PCB_20 et qui occupe avantageusement toute la surface de la face supérieure de la deuxième carte de circuit imprimé. Le deuxième enroulement E2_Tr du transformateur est fixé sur la face supérieure de cette deuxième plaque de blindage.

Le convertisseur d'entrée Conv_i du système comporte par exemple deux inductances L10, L20 de lissage. Elles comportent chacune un circuit magnétique réalisé de la manière décrit ci-dessus, c'est-à-dire avec des entrefers formés entre une première partie P1_L10, P1_L20 de leur noyau ferromagnétique et la première plaque de blindage P1_BL. La même plaque de blindage sert à fermer les circuits magnétiques des deux inductances. Comme évoqué ci-dessus, chaque carte de circuit imprimé présente une couche isolante ISO_10, ISO_20 électrique contre laquelle est fixée la plaque de blindage associée. La surface totale de la plaque de blindage est donc suffisante pour former plusieurs surfaces d'entrefer, permettant ainsi de fermer plusieurs circuits magnétiques. Les flux magnétiques générées dans les inductances sont référencés FI_L10 et FI_L20.

On comprend que l'emploi de la solution de l'invention dans un tel système de transmission d'énergie sans contact permet notamment de supprimer une carte de circuit imprimé, par rapport à la solution classique. En mutualisant la réalisation des inductances à la solution de blindage, la première carte de circuit imprimé et la deuxième carte de circuit imprimé représentées sur la figure 4 peuvent être réunies en une seule.

La solution de réalisation des inductances conforme à l'invention présente ainsi de nombreux avantages, parmi lesquels :
- Elle est particulièrement peu encombrante car elle permet d'utiliser une plaque de blindage déjà présente pour réaliser le circuit magnétique de chaque inductance ;
- Elle est peu encombrante car elle permet de réaliser l'ensemble d'un système de transmission d'énergie sans contact à partir de deux cartes de circuit imprimé seulement ;
- Elle est facile à réaliser car elle ne nécessite aucune modification de la structure de l'inductance ;
- Elle est d'un coût plus faible qu'une solution classique car elle supprime l'utilisation de la deuxième partie du noyau ferromagnétique de chaque inductance ;

## Revendications

1. Système électrique comprenant au moins un premier circuit électrique, un dispositif électrique (D_x), une première carte de circuit imprimé (PCB_x, PCB_10) supportant ledit premier circuit électrique, un dispositif de blindage dudit dispositif électrique comportant au moins une première plaque de blindage (Pz_BL) fixée à ladite première carte de circuit imprimé, ledit premier circuit électrique comportant au moins une inductance (Ly, L10, L20), **caractérisé en ce que** ladite inductance comporte au moins une première pièce ferromagnétique (P1_Ly) fixée sur la première carte de circuit imprimé et agencée pour présenter au moins un entrefer avec ladite première plaque de blindage (Pz_BL, P1_BL, P2_BL) de manière à former avec celle-ci un circuit magnétique.

2. Système selon la revendication 1, **caractérisé en ce que** ledit entrefer du circuit magnétique est créé entre une première surface d'entrefer de ladite première pièce ferromagnétique de l'inductance (Ly, L10, L20) et une deuxième surface d'entrefer située en vis-à-vis appartenant à ladite première plaque de blindage, et **en ce que** cette deuxième surface d'entrefer de la plaque présente une superficie inférieure à celle de la surface totale de la première plaque de blindage.

3. Système selon la revendication 1 ou 2, **caractérisé en ce que** la première carte de circuit imprimé (PCB_x, PCB_10) comporte au moins une première couche isolante (ISO_x, ISO_10) électrique sur laquelle est fixée ladite première plaque de blindage (Pz_BL, P1_BL).

4. Système selon l'une des revendications 1 à 3, **caractérisé en ce qu'**il est de type à transmission d'énergie sans contact comportant un deuxième circuit électrique, une deuxième carte de circuit imprimé (PCB_20) supportant le deuxième circuit électrique, un transformateur (Tr) formant ledit dispositif électrique et comportant un premier enroulement (E1_Tr) auquel est connecté ledit premier circuit électrique et un deuxième enroulement (E2_Tr) auquel est connecté ledit deuxième circuit électrique.

5. Système selon la revendication 4, **caractérisé en ce que** le premier circuit électrique et le deuxième circuit électrique comportent un convertisseur de puissance d'entrée (Conv_i) et un convertisseur principal (Conv_p) comportant ledit transformateur (Tr), un premier pont de commutation (PC1_p) connecté au premier enroulement (E1_Tr) du transformateur et un deuxième pont de commutation (PC2_p) connecté au deuxième enroulement (E2_Tr) du transformateur.

6. Système selon la revendication 4 ou 5, **caractérisé en ce que** la première carte de circuit imprimé (PCB_x, PCB_10) comporte une première face (F1_x, F1_10) sur laquelle est réalisée ledit premier circuit électrique et une deuxième face (F2_x, F2_10) sur laquelle est fixée ladite première plaque de blindage.

7. Système selon l'une des revendications 4 à 6, **caractérisé en ce que** ledit premier enroulement (E1_Tr) du transformateur est fixé à ladite première plaque de blindage (P1_BL).

8. Système selon l'une des revendications 4 à 7, **caractérisé en ce que** le dispositif de blindage comporte une deuxième plaque de blindage (P2_BL) fixée à la deuxième carte de circuit imprimé (PCB_20) et **en ce que** ladite deuxième carte de circuit imprimé comporte une première face (F1_20) sur laquelle est fixée ladite deuxième plaque de blindage et une deuxième face (F2_20) sur laquelle est réalisée ledit deuxième circuit électrique.

9. Système selon la revendication 8, **caractérisé en ce que** ledit deuxième enroulement (E2_Tr) du transformateur est fixé à ladite deuxième plaque de blindage (P2_BL).

10. Système selon la revendication 8 ou 9, **caractérisé en ce que** la deuxième carte de circuit imprimé (PCB_20) comporte au moins une deuxième couche isolante électrique (ISO_20) sur laquelle est fixée ladite deuxième plaque de blindage.

## Patentansprüche

1. Elektrisches System mit mindestens einem ersten elektrischen Schaltkreis, einer elektrischen Vorrichtung (D_x), einer ersten Karte mit gedruckter Schaltung (PCB_x, PCB_10), die den ersten elektrischen Schaltkreis trägt, einer Vorrichtung zum Abschirmen der elektrischen Vorrichtung mit mindestens einer an der ersten Karte mit gedruckter Schaltung befestigter ersten Abschirmplatte (Pz_BL), wobei der erste elektrische Schaltkreis mindestens eine Induktivität (Ly, L10, L20) aufweist, **dadurch gekennzeichnet, daß** die Induktivität mindestens ein erstes ferromagnetisches Teil (P1_Ly) aufweist, das auf der Karte mit gedruckter Schaltung befestigt ist und dazu ausgelegt ist, zur ersten Abschirmplatte (Pz_BL, P1_BL, P2_BL) hin wenigstens einen Luftspalt aufzuweisen, um mit dieser einen magnetischen Kreis zu bilden.

2. System gemäß Anspruch 1, **dadurch gekennzeichnet, daß** der Luftspalt des magnetischen Kreises zwischen einer ersten Luftspaltoberfläche des ersten ferromagnetischen Teils der Induktivität (Ly, L10, L20) und einer gegenüberliegenden, zur ersten Abschirmplatte gehörenden zweiten Luftspaltoberfläche gebildet wird und daß diese zweite Luftspaltoberfläche der Platte eine Oberfläche aufweist, die geringer als die gesamte Oberfläche der ersten Abschirmplatte ist.

3. System gemäß Anspruch 1 oder 2, **dadurch gekennzeichnet, daß** die erste Karte mit gedruckter Schaltung (PCB_x, PCB_10) mindestens eine erste elektrisch isolierende Schicht (ISO_x, ISO_10) aufweist, auf der die erste Abschirmplatte (Pz_BL, P1_BL) befestigt ist.

4. System gemäß einem der Ansprüche 1 bis 3, **dadurch gekennzeichnet, daß** es vom Typ der kontaktlosen Energieübertragung ist, der einen zweiten elektrischen Schaltkreis, eine zweite Karte mit gedruckter Schaltung (PCB_20), die den zweiten Schaltkreis trägt, einen Transformator (Tr), der die elektrische Vorrichtung bildet und eine erste Wicklung (E1_Tr) aufweist, mit der der erste elektrische Schaltkreis verbunden ist, und eine zweite Wicklung (E2_Tr), mit der der zweite elektrische Schaltkreis verbunden ist, aufweist.

5. System gemäß Anspruch 4, **dadurch gekennzeichnet, daß** der erste elektrische Schaltkreis und der zweite elektrische Schaltkreis einen Eingangsleistungswandler (Conv_i) und einen Hauptwandler (Conv_p), der den Transformator (Tr) trägt, eine mit der ersten Wicklung (E1_Tr) des Transformators verbundene erste Kommunikationsbrücke (PC1_p) und eine mit der zweiten Wicklung (E2_Tr) des Transformators verbundene zweite Kommunikationsbrücke (PC2_p) aufweisen.

6. System gemäß Anspruch 4 oder 5, **dadurch gekennzeichnet, daß** die erste Karte mit gedruckter Schaltung (PCB_x, PCB_10) eine erste Seite (F1_x, F1_10), auf der der erste elektrische Schaltkreis ausgebildet ist, und eine zweite Seite (F2_x, F2_10), auf der die erste Abschirmplatte befestigt ist, aufweist.

7. System gemäß einem der Ansprüche 4 bis 6, **dadurch gekennzeichnet, daß** die erste Wicklung (E1_Tr) des Transformators an der ersten Abschirmplatte (P1_BL) befestigt ist.

8. System gemäß einem der Ansprüche 4 bis 7, **dadurch gekennzeichnet, daß** die Abschirmvorrichtung eine an der zweiten Karte mit gedruckter Schaltung (PCB_20) befestigte zweite Abschirmplatte (P2_BL) aufweist und daß die zweite Karte mit gedruckter Schaltung eine erste Seite (F1_20), auf der die zweite Abschirmplatte befestigt ist, und eine zweite Seite (F2_20), auf der der zweite elektrische Schaltkreis ausgebildet ist, aufweist.

9. System gemäß Anspruch 8, **dadurch gekennzeichnet, daß** die zweite Wicklung (E2_Tr) des Transformators an der zweiten Abschirmplatte (P2_BL) befestigt ist.

10. System gemäß Anspruch 8 oder 9, **dadurch gekennzeichnet, daß** die zweite Karte mit gedruckter Schaltung (PCB_20) mindestens eine zweite elektrisch isolierende Schicht (ISO_20) aufweist, auf der die zweite Abschirmplatte befestigt ist.

## Claims

1. Electric system comprising at least one first electric circuit, an electric device (D_x), a first printed circuit board (PCB_x, PCB_10) supporting said first electric circuit, a device for shielding said electric device comprising at least one first shielding plate (Pz_BL) attached to said first printed circuit board, said first electric circuit comprising at least one inductor (Ly, L10, L20), **characterized in that** said inductor comprises at least one first ferromagnetic part (P1_Ly) attached to the first printed circuit board and arranged to have at least one air gap with said first shielding plate (Pz_BL, P1_BL, P2_BL), in such a way as to form a magnetic circuit with the latter.

2. System according to claim 1, wherein said air gap of the magnetic circuit is created between a first air gap surface of said first ferromagnetic part of the inductor (Ly, L10, L20) and a second, opposite, air gap surface, belonging to said first shielding plate, and wherein this second air gap surface of the plate has a surface area lower than that of the total surface of the first shielding plate.

3. System according to claim 1 or 2, wherein the first printed circuit board (PCB_x, PCB_10) comprises at least one first electrical insulating layer (ISO_x, ISO_10) to which said first shielding plate (Pz_BL, P1_BL) is attached.

4. System according to any of claims 1 to 3, wherein it is of the contactless energy transmission type, comprising a second electric circuit, a second printed circuit board (PCB_20) supporting the second electric circuit, a transformer (Tr) forming said electric device and comprising a first winding (E1_Tr) to which said first electric circuit is connected and a second winding (E2_Tr) to which said second electric circuit is connected.

5. System according to claim 4, wherein the first electric circuit and the second electric circuit comprise an input power converter (Conv_i) and a main converter (Conv_p) comprising said transformer (Tr), a first switching bridge (PC1_p) connected to the first winding (E1_Tr) of the transformer and a second switching bridge (PC2_p) connected to the second winding (E2_Tr) of the transformer.

6. System according to claim 4 or 5, wherein the first printed circuit board (PCB_x, PCB_10) has a first face (F1_x, F1_10) on which said first electric circuit is made and a second face (F2_x, F2_10) to which said first shielding plate is attached.

7. System according to any of claims 4 to 6, wherein said first winding (E1_Tr) of the transformer is attached to said first shielding plate (P1_BL).

8. System according to any of claims 4 to 7, wherein the shielding device comprises a second shielding plate (P2_BL) attached to the second printed circuit board (PCB_20) and wherein said second printed circuit board has a first face (F1_20) to which said second shielding plate is attached and a second face (F2_20) on which said second electric circuit is made.

9. System according to claim 8, wherein said second winding (E2_Tr) of the transformer is attached to said second shielding plate (P2_BL).

10. System according to claim 8 or 9, wherein the second printed circuit board (PCB_20) comprises at least one second electrical insulating layer (ISO_20) to which said second shielding plate is attached.
